# EUROPÄISCHE PATENTSCHRIFT

(11) **EP 2 935 964 B1**
(45) Veröffentlichungstag und Bekanntmachung des Hinweises auf die Patenterteilung: **24.04.2019**
(21) Anmeldenummer: 13814419.1
(22) Anmeldetag: 07.11.2013
(51) Int. Cl.: F16L 23/18, F16J 15/10, F16J 15/12

(54) **STATISCHE DICHTUNG**
STATIC SEAL
JOINT STATIQUE

(30) Priorität: 19.12.2012 DE 102012024789
(43) Veröffentlichungstag der Anmeldung: 28.10.2015
(73) Patentinhaber: P. J. Schulz GmbH, 51107 Köln (DE)
(72) Erfinder: PFLUG, Herwig, 65391 Lorch (DE); SCHULZ, Martin, 51429 Bergisch-Gladbach (DE)
(74) Vertreter: Demski, Siegfried
(86) Internationale Anmeldenummer: PCT/DE2013/000658
(87) Internationale Veröffentlichungsnummer: WO 2014/094700

(56) Entgegenhaltungen:
- WO-A1-95/10720
- WO-A1-2005/100829
- DE-A1- 3 320 665
- GB-A- 952 755
- GB-A- 2 286 861
- US-A1- 2010 230 960

## Beschreibung

Die Erfindung betrifft eine Dichtungsanordnung, bestehen aus einer statischen Dichtung und Dichtflächen, wobei die Dichtung aus einem Grundkörper besteht und an zwei voneinander abgewandten Außenflächen des Grund-körpers beidseitig Schneiden ausgebildet sind und die Außenflächen zwischen zwei Dichtflächen angeordnet sind.

Bei zahlreichen technischen Anwendungen wird eine Abdichtung mehrerer Bauteile gefordert. So kann zur Führung einer Prozessflüssigkeit oder eines Prozessgases eine Abdichtung von Behältern oder Rohrelementen erforderlich sein. Die verwendeten Dichtungen sollen hohe Standzeiten aufweisen, was besonders bei hohen oder niedrigen Temperaturen und/oder Drücken bei zahlreichen Dichtungen nicht gegeben ist. Statische Dichtungen, welche gegeneinander unbewegliche Bauteile abdichten, werden mit einem hohen Anpressdruck beaufschlagt, wohingegen der Anpressdruck bei dynamischen Dichtungen, welche gegeneinander bewegliche Bauteile abdichten, vergleichsweise gering ist.

Von besonderer Bedeutung ist die Abdichtung von metallischen Behältern zur Lagerung bedenklicher oder schädlicher Stoffe, wie umweltschädliche Chemikalien oder radioaktive Stoffe. Aus Sicherheitsgründen müssen diese Behälter auch bei ruhender Belastung sowie bei großen Temperatur- und Druckschwankungen, bei Schlag- und Brandeinwirkung dicht bleiben. Darüber hinaus muss diese Dichtigkeit über lange Zeiträume gewährleistet sein, was insbesondere bei der Endlagerung von radioaktiven Stoffen und Stoffen mit zum Teil extremer Giftigkeit (Phosgen, Dioxin) Bedingung für die Einlagerung ist. Bei einer Endlagerung radioaktiver Stoffe sollen die Behälter über Jahrhunderte die erforderliche Dichtigkeit aufweisen. Diesen hohen Anforderungen können Elastomere und die meisten anderen in der Dichtungstechnik verwendeten Dichtungswerkstoffe nicht genügen. Bei der Endlagerung werden die Behälter in einer entsprechenden Gesteinsschicht, zum Beispiel in einem Salzstock wie in Gorleben gelagert, wobei aufgrund der langen Einlagerungszeiten nicht ausgeschlossen werden kann, dass die Behälter aufgrund von geologischen Ereignissen oder Umwelteinflüssen extremen Bedingungen ausgesetzt werden. Aus diesem Grunde werden die für die Lagerung von radioaktiven Stoffen vorgesehenen Behälter Prüfverfahren unterzogen, wo sie insbesondere bei einem Brandtest einer hohen Temperatur von bis zu 800°C und bei einem Falltest einer Schlageinwirkung ausgesetzt werden.

Aus dem Stand der Technik sind zahlreiche Dichtungen, u.a. nichtmetallische Dichtungen und nichtmetallische Weichstoffdichtungen, bekannt, welche verschiedenen Verwendungszwecken zugeführt werden können.

So ist aus der GB 2 182 985 A eine Dichtung für Flanschverbindungen zwischen Rohrleitungen bekannt. Die Dichtung besteht aus einem Metallkern und beidseitig auf den Metallkern angeordneten Lagen aus einer Graphitfolie und einer metallischen Verstärkung. Bei der Graphitfolie handelt es sich um expandiertes Graphit, das sich von dem bergmännischen Graphit dahingehend unterscheidet, dass künstlich Lufteinschlüsse in die Graphitstruktur eingebracht wurden. Dadurch wird dem Graphit bis zu einer Grenzpressung verstärkte und bleibende Elastizität verliehen. Die Lagen aus Graphitfolie und Metallverstärkung sind abwechselnd auf dem Metallkern angeordnet und durch ein Adhäsiv miteinander und mit dem Metallkern verbunden.

Aus der DE 195 26 364 C1 ist ein Dichtungsring bekannt, welcher im Querschnitt eine Linsenform aufweist und aus abwechselnd angeordneten Lamellen aus expandiertem Graphit und Metalllamellen besteht. Dieser Aufbau verleiht dem Dichtungsring eine langzeitbeständige Elastizität, sodass der Nachteil zuvor bekannter Dichtungsringe, bei statischer Belastung nach kurzer Zeit eine deutlich verminderte Rückstellkraft im Berührungsbereich aufzuweisen, überwunden wird. Der Dichtungsring ist bei Temperaturen zwischen - 200 °C und + 500 °C und bei Drücken zwischen ca. 0 bar und 200 bar einsetzbar. Darüber hinaus ist der Dichtungsring hochgradig chemisch beständig, weil insbesondere expandiertes Graphit gegenüber fast allen Chemikalien beständig ist.

Aus der DE 42 28 073 A1 ist ein Dichtelement aus expandiertem Graphit bekannt, welches einen Zusatzstoff aufweist, der in verteilten voneinander gesonderten Nestern angeordnet ist. Durch dieses Dichtungselement wird der Nachteil einer hohen Reibung von reinen Graphitdichtungen beseitigt, da der in den Nestern angeordnete Zusatzstoff die Reibung mit den zu dichtenden Bauteilen herabsetzt. Diese Dichtung ist folglich als dynamische Dichtung ausgelegt, die hohen Temperaturen und chemisch aggressiven Umgebungen Stand hält. Die Nester können sich über die gesamte Dicke des Dichtelementes erstrecken oder eine begrenzte Tiefe aufweisen.

Aus der DE 29 42 092 A1 ist eine Vorrichtung für die Aufbewahrung von radioaktiven Abfallstoffen bekannt, welche aus einem Innenbehälter und einem Außenbehälter besteht. Zwischen beiden Behältern ist ein Korrosionsschutzbehälter aus Graphit ausgebildet. Der Innenbehälter und der Außenbehälter sind durch Deckel verschlossen, welche jeweils durch Gewinde auf dem Innen- und Außenbehälter befestigt werden. Zwischen den Deckeln und den Behältern sind Graphitflachdichtungen in Form von Dichtungsringen angeordnet, sodass der Behälter gegen chemische Einwirkung geschützt und langzeitdicht ist.

Die WO 95/10720 A1 offenbart eine Flanschdichtung für Rohrleitungen, welche aus einem in sich geschlossenen Grundkörper mit darin ausgebildeten Nuten besteht. Der Grundkörper weist hierbei jeweils zwei Nuten auf den beiden Dichtflächen auf, wobei in den Nuten Dichtelemente eingelagert sind. Die Form der Nuten wird durch die Seitenwandungen und Bodenfläche bestimmt, welche einen rechten Winkel einschließen oder eine der Seitenwandungen mit der Bodenfläche der Nut einen spitzen Winkel einschließt.

Die DE 33 20 665 A1 offenbart eine Dichtung, welche einen ringförmigen Metallkern aufweist, in dessen Dichtflächen Rinnen ausgebildet sind. In den Rinnen werden hochtemperaturbeständige Dichtungselemente mit gutem Rückstellvermögen eingelegt, wobei sich die Dichtungselemente vor dem Einbau der Dichtung über die Rinnenhöhe hinaus erstreckt und nach dem Einbau mit der Rinnenhöhe fluchten.

Aus der US-Anmeldung 2010/023069 A1 ist eine Flanschdichtung für Wellenleiter zur Leitung elektrischer Wellen bekannt, welcher zwischen zwei Flanschelementen angeordnet wird und elektrisch leitfähig ist. Die Dichtung ist in sich geschlossen und weist eine ebene Dichtfläche auf, wobei ein zentraler Durchbruch zur Durchleitung elektromagnetischer Wellen und zwei weitere Durchbrüche zur Aufnahme von Bolzen vorhanden sind. Die Bolzen ermöglichen eine Fixierung der Dichtungselemente.

Die GB 2286861 A1 offenbart eine Dichtung, welche einen Kern und zwei Dichtungslager aufweist. Der Kern besteht hierbei vorzugsweise aus Metall und ist in sich geschlossen, wobei der Kern wiederum einen zentralen Durchbruch besitzt und auf seinen Dichtflächen im Querschnitt dreieck- oder rechteckförmige Erhebungen aufweist.

Der Erfindung liegt die Aufgabe zugrunde, eine hochdichte Dichtung aufzuzeigen, welche ihre Dichtigkeit auch unter dem Einfluss ionisierender Strahlung, von Chemikalien, Hitze, Druck und mechanischen Schlägen über sehr lange Zeiträume beibehält.

Zur Lösung der Aufgabe wird eine statische Dichtung vorgeschlagen, die sich dadurch auszeichnet, dass die Schneiden im Querschnitt dreieckförmig ausgebildet sind und eine Dreiecksfläche (Freifläche) rechtwinklig zum Grundkörper ausgerichtet ist, wobei die Spitzen der Schneiden gegenüber den Außenflächen des Grundkörpers hervorstehen und zwischen den Schneiden erste und zweite Nuten ausgebildet sind, wobei die ersten Nuten im Querschnitt rechteckförmig, und die zweiten Nuten dreieckförmig oder trapezförmig ausgebildet sind. Weitere vorteilhafte Ausgestaltungen der Erfindung ergeben sich aus den Unteransprüchen.

Die auf zwei voneinander abgewandten Außenflächen ausgebildeten Schneiden weisen den vorteilhaften Effekt auf, dass bei einer Anordnung der erfindungsgemäßen Dichtung zwischen zwei Dichtflächen mehrere hintereinander angeordnete dichtende Kontaktbereiche zwischen dem Grundkörper der Dichtung und den Dichtflächen ausgebildet sind. Die Schneiden nehmen dabei die Anpresskraft auf, wobei die Spitzen der Schneiden geringfügig plastisch verformt werden, sodass hochdichte Kontaktbereiche zwischen dem Grundkörper und den Dichtflächen ausgebildet sind. Der Grundkörper kann aus einem Metall, beispielsweise Messing oder Stahl, aus einem Kunststoff, beispielsweise Polyamid, oder einem anderen Material bestehen, das ungefähr 20 % weicher ist als das Material, aus dem die weichere der Dichtflächen besteht. Die Schneiden sind hierbei im Querschnitt dreieckförmig ausgebildet, wobei eine Dreiecksfläche (Freifläche) rechtwinklig zum Grundkörper ausgerichtet ist. Zwischen den Schneiden befinden sich erste und zweite Nuten, wobei die ersten Nuten im Querschnitt im Wesentlichen rechteckförmig ausgebildet sind und die zweiten Nuten im Wesentlichen dreieckförmig oder trapezförmig ausgebildet sind. Sowohl in den ersten als auch in den zweiten Nuten können hierbei Dichtungselemente angeordnet sein. Besonders vorteilhaft ist eine Ausgestaltung der Nuten, die eine alternierende Anordnung der ersten und zweiten Nuten vorsehen, sodass beispielsweise rechteckförmige Dichtungselemente und dreieckförmige oder trapezförmige Dichtungselemente in den jeweiligen Nuten eingelegt werden können. In einer bevorzugten Ausführungsform sind die Nuten zu beiden Seiten des Grundkörpers in derart angeordnet, dass die ersten und zweiten Nuten paarweise in einem gleichen radialen Abstand zum Zentrum angeordnet sind.

In vorteilhafter Ausgestaltung kann der Grundkörper der erfindungsgemäßen Dichtung als Träger für wenigstens ein Dichtelement dienen. Bei dem wenigstens einen Dichtelement kann es sich um ein Dichtelement aus einem Nichtmetall, z.B. einem Weichstoff, oder aus einem Metall handeln. Dabei nimmt das Dichtelement beim Anordnen der Dichtung zwischen zwei Dichtflächen, welche zum Beispiel mittels Schrauben aneinander gepresst werden, abdichtend zunächst die Hauptlast auf und befindet sich damit zunächst im Krafthauptschluss. Das zumindest eine Dichtelement, wobei bei einer Mehrzahl der Anwendungen mehrere Dichtelemente auf beiden Seiten des Grundkörpers in den Nuten zwischen den Schneiden angeordnet sein können, nimmt ebenfalls einen Teil der Last auf. Bei der Komprimierung der Dichtelemente kommt es zu einer dauerhaften Verformung der Schneiden, welche gleichzeitig einen Teil der Krafthauptschlusskomponente aufnehmen, und damit die Dichtelemente teilweise entlasten. Durch die Verformung verlieren die Schneiden an Rückstellkraft, was zur Folge hat, dass die Dichtheit der Dichtung nachlassen könnte. Die Schneiden stellen jedoch sicher, dass die Dichtelemente nicht soweit komprimiert werden, dass sie ihr Rückstellvermögen verlieren. Durch die aufgezeigte Lösung der Kombination von Schneiden und Dichtelementen wird hingegen sichergestellt, dass die Rückstellkraft der Dichtelemente erhalten bleibt und die Dichtheit gewährleistet ist.

Der Grundkörper kann aus einem Metall, wie Messing oder Stahl, oder aus einem Kunststoff, wie Polyamid, einem Gusswerkstoff, einem Sinterwerkstoff, einem modifizierten Natur-Werkstoff oder einem anderen Nichtmetall bestehen. Die Familie der Metalldichtungen und der Metallweichstoffdichtungen wird durch die vorliegende Erfindung durch eine weitere Dichtung, welche bevorzugt über Schneiden metallisch oder bei Metall-Weichstoff-Dichtungen metallisch und gleichzeitig weichstoffdichtend ist, bereichert. Das wenigstens eine Dichtelement besteht in bevorzugter Weise zumindest teilweise aus expandiertem Graphit, Glimmer, Silikon oder einem Metall. Graphit bietet den besonderen Vorteil, dass dieses auch unter dem Einfluss chemisch aggressiver Umgebung und ionisierender Strahlung langzeitbeständig ist. Bei dem Silikon kann es sich um ein bei Raumtemperatur vernetzendes Mehrkomponentensilikon handeln. Alternativ kann das wenigstens eine Dichtelement aber auch aus einem anderen Material oder aus Mischungen verschiedener Materialien bestehen, solange das wenigstens eine Dichtelement über eine ausreichende bleibende Elastizität bei bleibender Dichtheit verfügt, weil die Elastizität bei Verformung des Materials Rückstellkräfte bewirkt und erhält. So kann abhängig von dem Einsatzzweck der erfindungsgemäßen Dichtung das wenigstens eine Dichtelement auch aus einem aus der Dichtungstechnik bekannten Elastomer, Kunststoffen oder anderen Dichtungswerkstoffen bestehen.

Es kann aber auch vorgesehen sein, dass wenigstens eine Nut des Grundkörpers mit einem Sperrdruckmedium oder einem Indikatormedium gefüllt ist. Bei dem Sperrdruckmedium kann es sich um ein Gas, wie zum Beispiel CO₂, um eine Flüssigkeit, z.B. eine anaerobe Flüssigkeit, oder um eine Paste handeln. Das Sperrdruckmedium erhöht vorteilhaft die Dichtheit der Dichtung. Als Indikatormedium kann ein Gas oder eine Flüssigkeit verwendet werden und ermöglicht die Detektion einer Leckage.

Durch die Anordnung von Dichtelementen in den im Querschnitt im Wesentlichen rechteckförmig, im Wesentlichen dreieckförmig oder im Wesentlichen trapezförmig ausgebildeten Nuten, wird in vorteilhafter Weise erreicht, dass die Nuten wahlweise sowohl als Packungs- als auch als Dichtungseinbauräume ausgebildet sind, wobei Dichtelemente, welche in im Wesentlichen rechteckförmigen Nuten angeordnet sind, mindestens zwei dichtende Anlageflächen mit Seitenbegrenzung aufweisen und die Dichtelemente, die in im Wesentlichen dreieck- oder im Wesentlichen trapezförmigen Nuten angeordnet sind, mindestens drei dabei allseitig dichtende Anlageflächen aufweisen. Durch die im Wesentlichen dreieckförmige oder im Wesentlichen trapezförmige Ausbildung der Nuten wird erreicht, dass eine seitliche Verformung der Dichtelemente bewirkt wird, sodass die Rückstellkräfte auf die Dichtfläche konzentriert sind.

Es kann weiterhin vorgesehen sein, dass die Spitzen der Schneiden unterschiedliche Höhen aufweisen. Durch eine unterschiedliche Ausbildung der Höhen der Spitzen der Schneiden kann vorgegeben werden, welche Teilbereiche des Grundkörpers in den Krafthauptschluss geführt werden und damit, welche Bereiche des Grundkörpers sich im Krafthauptschluss befinden. So kann vorgesehen sein, dass nur ein Teil der Schneiden in den Krafthauptschluss übergehen, wohingegen sich die anderen Schneiden im Kraftnebenschluss befinden. Dadurch kann sichergestellt werden, dass die Dichtheit auch bei einem Nachlassen der Anpresskraft, zum Beispiel durch erhöhten Innendruck im Dichtbereich eines Behälters, zu dem es bei einer hohen Innentemperatur kommen kann, gegeben ist, da die die Last aufnehmenden Schneiden stärker plastisch verformt werden als die im Kraftnebenschluss befindlichen Schneiden. Die Dichtheit bei Nachlassen der Anpresskraft wird aber insbesondere aufgrund der Elastizität der Dichtelemente aufrecht erhalten. Daher ist für die Dichtelemente ein Vielfaches des Volumens vorgesehen, als bei Graphitauflagen für Kammprofile üblich. Ferner kann vorgesehen sein, dass die Nuten zwischen den Schneiden unterschiedliche Tiefen aufweisen, sodass die Dichtelemente, die in den Nuten angeordnet werden, unterschiedliche Volumina aufweisen. Da der Betrag der Rückstellkraft eines Dichtelementes von seinem Volumen und der Deformation abhängt, können somit die Beträge der auftretenden Rückstellkräfte eingestellt werden. Aus diesem Grunde kann auch vorgesehen sein, dass die Spitzen der Schneiden voneinander unterschiedliche seitliche Abstände aufweisen, wodurch das Volumen der zwischen den Schneiden angeordneten Dichtelemente ebenfalls größer ausgebildet sein kann.

Der Neigungswinkel der Schneidenflanken (Druckfläche) kann zwischen 0 Grad und 90 Grad betragen, sodass die Basisbreite der Schneiden eingestellt werden kann. Dadurch kann die erfindungsgemäße Dichtung für unterschiedliche Anpresskräfte ausgelegt werden, da das Ausmaß der Verformung der Schneiden bei einer bestimmten Anpresskraft von deren Spitzheit beziehungsweise Stumpfheit abhängt.

In besonderer Ausgestaltung der erfindungsgemäßen Dichtung ist zwischen zumindest jeweils zwei Schneiden auf den voneinander abgewandten Außenflächen des Grundkörpers ein die Verformung begrenzendes Stützelement ausgebildet, wobei sich das Stützelement über die Nutentäler zwischen den benachbarten Schneiden beider Außenflächen erstreckt. Das Stützelement kann ab einer höheren Pressung die steigende Hauptlast aufnehmen und befindet sich ab einer bestimmten Pressung selbst nur noch im Krafthauptschluss, wohingegen sich die Schneiden und die Dichtelemente nahezu unabhängig von steigender Anpresskraft im Kraftnebenschluss befinden, woraus sich die bereits geschilderten Vorteile ergeben. Bei dieser Ausgestaltung der erfindungsgemäßen Dichtung handelt es sich also um eine Krafthauptschlussdichtung mit dichtenden Bereichen im Kraftnebenschluss. Das Stützelement ermöglicht es, insbesondere die Anpresskraft zur Erzielung einer bestimmten Dichtheit im Krafthauptschluss zu berechnen und einzustellen. Dies macht die erfindungsgemäße Dichtung vorteilhafterweise einer Standardisierung zugänglich, was insbesondere im Bereich der Lagerung von giftigen Stoffen von Bedeutung ist. Darüber hinaus kann das Stützelement aber auch Lastspitzen, die zum Beispiel durch Schläge, beispielsweise beim Verladen, entstehen, aufnehmen, sodass eine Beeinträchtigung der Dichtheitsfunktion der Schneiden und der Dichtelemente durch das Einwirken großer Lastspitzen verhindert wird.

In weiterer Ausgestaltung der Erfindung kann vorgesehen sein, dass der Grundkörper oder das zumindest eine Stützelement mindestens eine Durchgangsbohrung zwischen zwei voneinander abgewandten Anlageflächen des Stützelementes, die zentrisch oder exzentrisch in dem Stützelement angeordnet ist, aufweist. Die mindestens eine Durchgangsbohrung verbindet dabei die in sich geschlossene Vertiefung zwischen dem Stützelement und der angrenzenden Schneideflanke. Der Grundkörper kann darüber hinaus mindestens eine Stichbohrung, die mit jeweils zumindest einer Durchgangsbohrung und dem Innen- oder Außenrand des Grundkörpers in Verbindung steht, aufweisen. Die mindestens eine Stichbohrung kann zur Leckagefeststellung oder der Aufgabe eines Sperrmediums zwischen den Dichtflächen und den Anlageflächen dienen und darüber hinaus zur Langzeitkontrolle der Dichtheit der erfindungsgemäßen Dichtung genutzt werden. Die mindestens eine Durchgangsbohrung ermöglicht ferner eine Leckageabsaugung oder -messung und eine Sperrdruckaufgabe durch ein Sperrdruckgas, eine Sperrdruckflüssigkeit oder ein anderes Sperrdruckmedium, wie eine Sperrpaste. Darüber hinaus kann über die mindestens eine Durchgangsbohrung eine Indikatorflüssigkeit oder ein Indikatorgas, welches durch Verfärbung eine Leckage frühzeitig anzeigt, zugeführt werden.

In bevorzugter Ausgestaltung ist die mindestens eine Durchgangsbohrung exzentrisch in dem Stützelement auf der zu dichtenden Seite angeordnet. Die Anlageflächen des zumindest einen, bevorzugt mittigen Stützelementes können eben, wie bei einer Flachdichtung, oder nach außen gewölbt bis zu der Querschnittsform einer balligen Dichtung mit berechenbaren Krümmungsradius ausgebildet sein. Bei einer ebenen Ausführung der Anlagefläche des zumindest einen Stützelementes wird die Hauptlast auf die gesamte Anlagefläche verteilt, wobei keine Verbiegungen der Dichtbereiche zum Beispiel durch ein Stülpmoment auftreten dürfen. Eine nach außen gewölbte Ausbildung der Anlagefläche bietet den Vorteil, dass geringe bis mittlere Verbiegungen im Dichtbereich erlaubt sind und sich mögliche Leckagen oder das verwendete Sperrdruckgas in einem Bereich zwischen den Dichtflächen und den Anlageflächen des Stützelementes in den dort vorhandenen Vertiefungen zwischen dem Stützelement und den an diesem anliegenden Schneiden ansammeln und verteilen kann. Die Anlageflächen des zumindest einen Stützelementes können unabhängig von der Form des Stützelementes randseitige Vertiefungen aufweisen.

Darüber hinaus kann vorgesehen sein, dass jeweils eine im Querschnitt im Wesentlichen rechteckförmige Nut auf einer Außenfläche des Grundkörpers gegenüber einer im Querschnitt im Wesentlichen trapezförmigen oder im Wesentlichen dreieckförmigen Nut auf der abgewandten Außenfläche des Grundkörpers angeordnet ist. In dieser Ausgestaltung liegt eine Nut in Form eines Dichtungseinbauraumes stets einer Nut in Form eines Packungseinbauraumes gegenüber, wodurch die Dichtheit und Betriebssicherheit der erfindungsgemäßen Dichtung weiter gesteigert beziehungsweise gesichert werden kann, weil in einem Fall extremer Entlastung der Dichtung die dabei entstehenden Fugen zwischen den den Dichtbereich bildenden Bauteilen im Dichtbereich mittig besser geführt bleibt.

In weiterer Ausgestaltung der erfindungsgemäßen Dichtung kann auf wenigstens einer Anlagefläche des zumindest einen Stützelementes eine Schicht aus einem dichtenden Material angeordnet sein. Die Schicht aus einem dichtenden Material kann unter anderem aus einem Elastomer, einem Kunststoff, rußgefülltem Kautschuk oder einer geeigneten Oberflächenbeschichtung bestehen.

Bevorzugt ist das wenigstens eine Dichtelement formschlüssig zwischen zwei Schneiden des Grundkörpers, also in einer Nut, angeordnet, wobei die dem Grundkörper abgewandte Anlagefläche des wenigstens einen Dichtelementes eben oder nach außen gewölbt ausgebildet ist. Durch eine ebene Ausbildung der dem Grundkörper abgewandten Anlagefläche des wenigstens einen Dichtelementes wird die auf diese Anlagefläche wirkende Last gleichmäßig verteilt, wohingegen eine nach außen gewölbte Ausbildung dieser Anlagefläche zur Folge hat, dass die auf die Anlagefläche wirkende Last nur auf einen kleinen Bereich einwirkt. Die in diesem lokalen Bereich auf die Dichtfläche wirkende Rückstellkraft ist dann allerdings höher.

In weiterer Ausgestaltung der erfindungsgemäßen Dichtung kann diese ein Kontaktelement umfassen, welches aus einem dem Grundkörper zugewandten Metallblech und einer auf der dem Grundkörper abgewandten Seite des Metallbleches angeordneten Schicht aus expandiertem Graphit besteht, deren Dicke der Rauhtiefe der an der Schicht zur Anlage kommenden Dichtfläche angepasst sein kann. Dadurch wird vorteilhaft erreicht, dass die eingebaute, gepresste Dichtung auch bei bleibender Dichtheit im Betrieb noch geringfügig seitlich verschoben werden kann, da das Metallblech mit der erfindungsgemäßen Dichtung zur Anlage kommt und andererseits die Dichtfläche eines Bauteils mit der Graphitschicht zur Anlage kommt, wobei ein flächiger Kontakt zwischen der Graphitschicht und der Dichtfläche des Bauteils gegeben ist, da die Oberflächenrauhigkeiten der Dichtfläche in die Graphitschicht gepresst und mit dieser formschlüssig verbunden werden.

In besonders bevorzugter Ausgestaltung der erfindungsgemäßen Dichtung weist diese eine in sich geschlossene, bevorzugt kreissymmetrische Form auf. Dadurch kann eine erfindungsgemäße Metall-Weichstoffdichtung insbesondere Rohrverbindungen und zylindrische Behälter effizient mit einer hohen Dichtheit abdichten. Zahlreiche Behälter, insbesondere die zur Lagerung giftiger oder radioaktiver Stoffe, weisen eine zylindrische Form auf, sodass die erfindungsgemäße Dichtung dem Zweck der dichten Versiegelung solcher Behälter zugeführt werden kann.

Zur leichten Handhabung der erfindungsgemäßen Dichtung kann der Grundkörper und das wenigsten eine Dichtelement miteinander vorverpresst sein. Dadurch kann die so entstandene einbaufertige Dichtung schnell montiert und eine mögliche Beschädigung der Dichtelemente verhindert werden. Insbesondere bei der Verwendung von expandiertem Graphit für die Dichtelemente kann dadurch verhindert werden, dass diese bei der Montage oder beim Transport der Dichtung brechen oder beschädigt werden. Mögliche Ausführungsformen der Erfindung werden im Weiteren anhand der Figuren näher erläutert.

Es zeigt
- Fig. 1: den Querschnitt einer ersten Ausführungsform des Grundkörpers der erfindungsgemäßen Dichtung,
- Fig. 2: den Querschnitt einer zweiten Ausführungsform des Grundkörpers der erfindungsgemäßen Dichtung,
- Fig. 3: den Querschnitt einer dritten Ausführungsform des Grundkörpers der erfindungsgemäßen Dichtung,
- Fig. 4: den Querschnitt einer vierten Ausführungsform des Grundkörpers der erfindungsgemäßen Dichtung,
- Fig. 5: den Grundkörper aus Figur 1 zwischen dessen Schneiden Dichtelemente angeordnet sind,
- Fig. 6: den Grundkörper aus Figur 2 zwischen dessen Schneiden Dichtelemente angeordnet sind,
- Fig. 7: den Grundkörper aus Figur 4 zwischen dessen Schneiden Dichtelemente angeordnet sind und
- Fig. 8: den Grundkörper aus Figur 2 mit einem Kontaktelement.

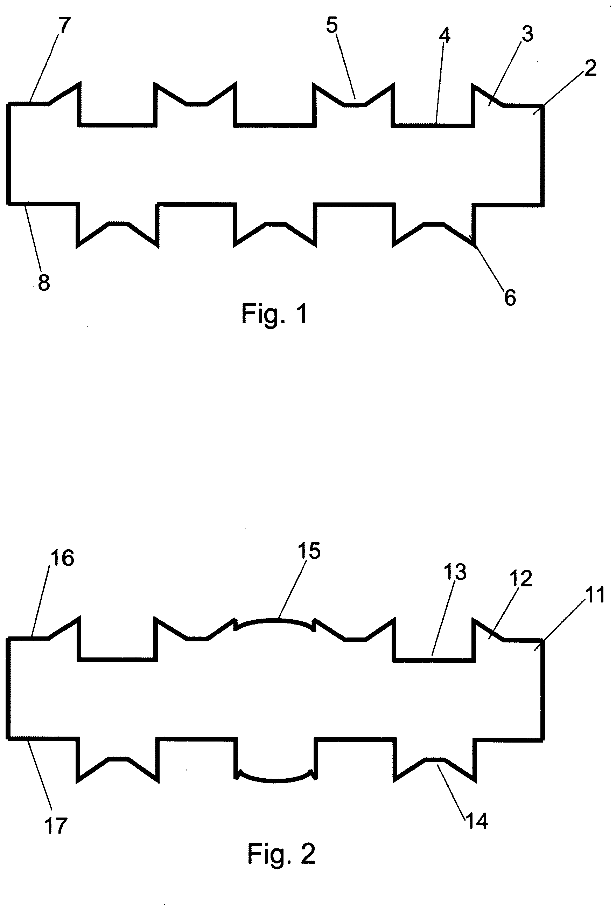

Figur 1 zeigt eine erste Ausführungsform eines Grundkörpers 2 der erfindungsgemäßen Dichtung. An zwei voneinander abgewandten Außenflächen 7, 8 des Grundkörpers 2 sind Schneiden 3 mit Schneidenspitzen 6 ausgebildet. Zwischen den Schneiden sind erste Nuten 4 und zweite Nuten 5 ausgebildet, wobei diese abwechselnd im Querschnitt rechteckförmig oder trapezförmig ausgebildet sind. Im gezeigten Ausführungsbeispiel sind die ersten Nuten 4 und zweiten Nuten 5 zu beiden Seiten jeweils alternierend angeordnet, sodass zu beiden Seiten des Grundkörpers 2 jeweils unterschiedliche erste und zweite Nuten 4, 5 diametral entgegengesetzt ausgerichtet angeordnet sind. Da diese Ausführungsform des Grundkörpers 2 auf den voneinander abgewandten Außenflächen 7, 8 jeweils sechs Schneiden 3 aufweist, bilden sich bei Installation der Dichtung zwölf dichtende Kontaktbereiche aus.

Figur 2 zeigt eine weitere Ausführungsform eines Grundkörpers 11 einer erfindungsgemäßen Dichtung. Im Gegensatz zu dem in der Figur 1 gezeigten Grundkörper 2 weist der Grundkörper 11 des Ausführungsbeispiels der Figur 2 ein Stützelement 15 auf, welches zwischen jeweils zwei Schneiden 12 auf beiden voneinander abgewandten Außenflächen 16, 17 des Grundkörpers 11 ausgebildet ist und sich über die Nutentäler der ersten Nuten 13 und zweiten Nuten 14 zwischen den benachbarten Schneiden 12 erstreckt. Das Stützelement 15 des Grundkörpers 11 nimmt ab einer Mindestpressung die Hauptlast, also einen Großteil der einwirkenden Anpresskraft, auf. Dadurch wird verhindert, dass die anderen Schneiden 12 zu stark verformt werden. Darüber hinaus bietet das Stützelement 15 den Vorteil, dass die erforderliche Anpresskraft zur Erreichung einer bestimmten Dichtheit im Krafthauptschluss nach den gängigen Verfahren berechnet und festgelegt werden kann. Die Anlageflächen des Stützelementes 15 können randseitige Vertiefungen aufweisen, sodass bei einer Installation der Dichtung die gestauchten, an dem Stützelement 15 anliegenden Schneiden 12 keine Einheit mit dem Stützelement 15 bilden können und immer eine randseitige Vertiefung erhalten bleibt.

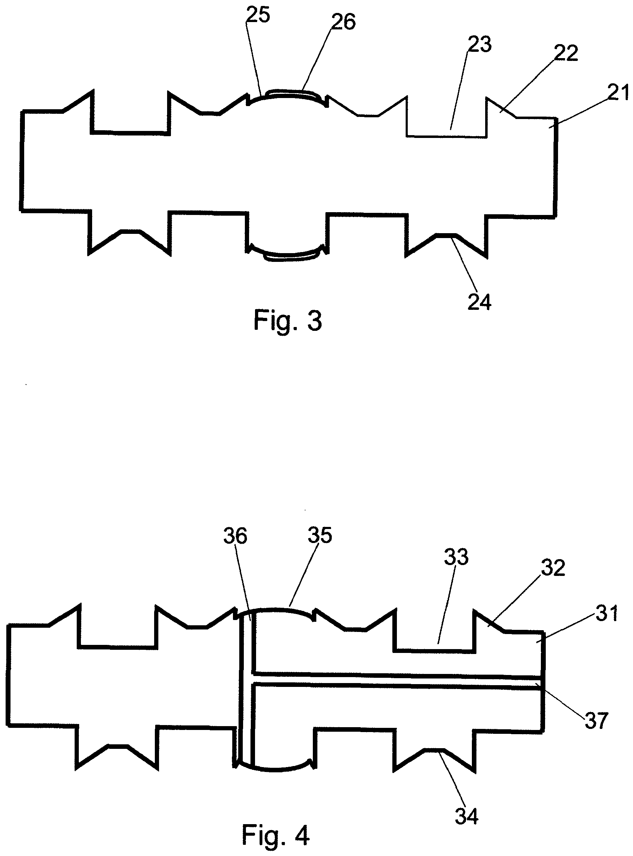

Figur 3 zeigt eine weitere Ausführungsform eines Grundkörpers 21 einer erfindungsgemäßen Dichtung. Bei diesem Grundkörper 21 ist auf den Anlageflächen des Stützelementes 25 eine Schicht aus einem dichtenden Material 26 angeordnet. Die ersten Nuten 23 sind bei diesem Ausführungsbeispiel annähernd rechteckförmig ausgebildet, während die zweiten Nuten 24 annähernd trapezförmig ausgebildet sind.

Figur 4 zeigt eine weitere Ausführungsform eines Grundkörpers 31 einer erfindungsgemäßen Dichtung, mit ersten Nuten 33 und zweiten Nuten 34. Bei diesem Grundkörper 31 weist das Stützelement 35 zusätzlich eine Durchgangsbohrung 36 auf. Die Durchgangsbohrung 36 verbindet dabei die Vertiefungen zwischen dem Stützelement 35 und den angrenzenden Schneidenflanken. Darüber hinaus weist der Grundkörper 31 eine Stichbohrung 37 auf, die mit der Durchgangsbohrung 36 und mit dem Innen oder Außenrand des Grundkörpers 31 in Verbindung steht. Mithilfe der Stichbohrung 37 kann eine Leckageabsaugung oder -messung oder eine Sperrdruckaufgabe mittels eines Sperrdruckmediums, wie einem Gas, einer Flüssigkeit oder einer Paste, zwischen den Dichtflächen und den Anlageflächen des Stützelementes 36 erfolgen. Darüber hinaus kann die Stichbohrung zur Langzeitkontrolle der Dichtheit der erfindungsgemäßen Dichtung genutzt werden.

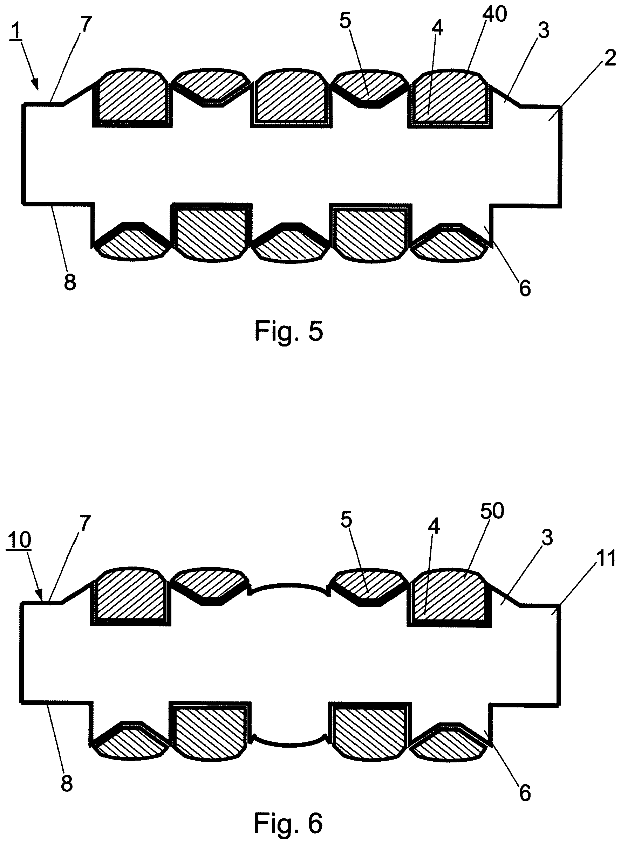

Figur 5 zeigt eine aus dem in Figur 1 dargestellten Grundkörper 2 und aus Dichtelementen 40 gebildete Dichtung, wobei in den Nuten zwischen den Schneiden 3 Dichtelemente 40 angeordnet sind. Im gezeigten Ausführungsbeispiel sind mehrere Nuten nebeneinander angeordnet. Die im Querschnitt im Wesentlichen rechteckförmigen ersten Nuten 4 bilden aufgrund ihrer Form Dichtungseinbauräume, wohingegen die im Querschnitt im Wesentlichen trapezförmigen zweiten Nuten 5 Packungseinbauräume bilden. Eine im Querschnitt im Wesentlichen trapezförmige Nut 5 einer Außenfläche 7 ist bei dieser Ausführungsform stets gegenüber einer im Wesentlichen rechteckförmigen Nut 4 einer Außenfläche 9 angeordnet. In dieser Ausführungsform der Dichtung 1 weisen die Schneidenspitzen alle die gleiche Höhe auf, sodass sie gemeinsam die Hauptlast aufnehmen und sich somit im Krafthauptschluss befinden. Die Dichtelemente 40 bestehen bei dieser Ausführungsform der erfindungsgemäßen Dichtung 1 aus expandiertem Graphit. Expandierter Graphit hat den Vorteil, dass es nach geeignet hoher Pressung bleibende Elastizität aufweist. Unter der Einwirkung der Anpresskraft werden die Dichtelemente 40 komprimiert und befinden sich im Kraftnebenschluss, weil eine weitere Verformung durch die verformten Schneiden verhindert wird. Durch die Schneiden 3 einerseits und die Rückstellkräfte der Dichtelemente andererseits erfolgt eine zuverlässige Abdichtung der Dichtflächen, wobei der Grundkörper 2 und die Dichtelemente 40 zur Erzielung einer Dichtheitswirkung zusammenwirken. Die Dichtelemente 40 übernehmen aufgrund ihrer Elastizität auch die Funktion einer Notdichtung beim extremen Abnehmen der Anpresskraft, da sich die Schneiden 3 bei Installation der Dichtung 1 plastisch verformend formschlüssig der Dichtoberfläche angepasst haben und jetzt deutlich entlastet werden. Dieses Ausführungsbeispiel der erfindungsgemäßen Dichtung 1 weist 22 dichtende Kontaktbereiche auf. Die Figuren 2, 3 und 4 zeigen mögliche vorteilhafte Ausgestaltungen des Grundkörpers 2 aus Figur 1, sodass in den Nuten aller dieser Grundkörper zumindest ein Dichtelement angeordnet sein kann.

Figur 6 zeigt eine aus dem in Figur 2 dargestellten Grundkörper 11 und aus Dichtelementen 50 gebildete Dichtung 10.

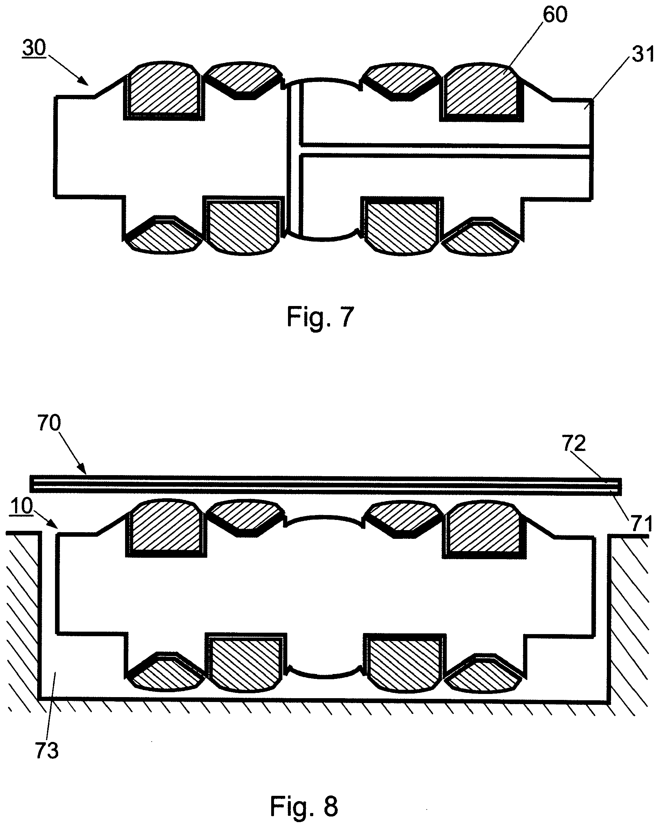

Figur 7 zeigt eine aus dem in Figur 4 dargestellten Grundkörper 31 und aus Dichtelementen 60 gebildete Dichtung 30.

Figur 8 zeigt die Dichtung 10 aus Figur 6, welche in einer Vertiefung 73 eines Bauteils angeordnet ist. Auf der von der Vertiefung 73 abgewandten Seite der Dichtung 10 ist ein Kontaktelement 70 angeordnet. Das Kontaktelement besteht aus einem Metallblech 71 und einer auf dem Metallblech 71 angeordneten dünnen Schicht aus expandiertem Graphit 72, wobei die Graphitschicht 72 auf der der Dichtung 10 abgewandten Seite des Metallbleches 71 angeordnet ist. Die Graphitschicht 72 des Kontaktelementes 70 wird gegen die der Vertiefung 73 gegenüberliegenden Dichtfläche gepresst, sodass die Unebenheiten der Dichtfläche in die Graphitschicht gepresst werden und ein flächiger dichtender Kontakt zwischen dem Metallblech und der Dichtfläche entsteht. Ein Kontaktelement 70 kann einseitig oder beidseitig der Dichtung 10 angeordnet werden. Das Kontaktelement 70 ermöglicht es, dass die eingebaute gepresste Dichtung im Betrieb noch geringfügig seitlich verschoben werden kann.

### Bezugszeichenliste

- 1: Statische Dichtung
- 2: Grundkörper
- 3: Schneide
- 4: Nut
- 5: Nut
- 6: Schneidenspitze
- 7: Außenfläche
- 8: Außenfläche
- 10: Statische Dichtung
- 11: Grundkörper
- 12: Schneide
- 13: Nut
- 14: Nut
- 15: Stützelement
- 16: Außenfläche
- 17: Außenfläche
- 21: Grundkörper
- 22: Schneide
- 23: Nut
- 24: Nut
- 25: Stützelement
- 26: Schicht aus elastischem Material
- 30: Statische Dichtung
- 31: Grundkörper
- 32: Schneide
- 33: Nut
- 34: Nut
- 35: Stützelement
- 36: Durchgangsbohrung
- 37: Stichbohrung
- 40: Dichtelement
- 50: Dichtelement
- 60: Dichtelement
- 70: Kontaktelement
- 71: Metallblech
- 72: Graphitschicht
- 73: Vertiefung

## Patentansprüche

1. Dichtungsanordnung, bestehen aus einer statischen Dichtung (1, 10, 30) und zwei Dichtflächen, wobei die Dichtung aus einem Grundkörper (2, 11, 21, 31) besteht und an zwei voneinander abgewandten Außenflächen (7, 8, 16, 17) des Grundkörpers (2, 11, 21, 31) beidseitig Schneiden (3, 12, 22, 32) ausgebildet sind und die Außenflächen (7, 8, 16, 17) zwischen den zwei Dichtflächen angeordnet sind, so dass mehrere hintereinander angeordnete dichtende Kontaktbereiche zwischen dem Grundkörper der Dichtung und den Dichtflächen ausgebildet werden,
wobei die Schneiden (3, 12, 22, 32) im Querschnitt dreieckförmig ausgebildet sind und eine Dreiecksfläche der Schneiden rechtwinklig zum Grundkörper (2, 11, 21, 31) ausgerichtet ist, wobei die Spitzen (6) der Schneiden (3, 12, 22, 32) gegenüber den Außenflächen (7, 8, 16, 17) des Grundkörpers (2, 11, 21, 31) hervorstehen und zwischen den Schneiden (3, 12, 22, 32) erste und zweite Nuten (4, 5, 13, 14, 23, 24, 33, 34) ausgebildet sind, und wobei die ersten Nuten (4, 13, 23, 33) im Querschnitt rechteckförmig, und die zweiten Nuten (5, 14, 24, 34) dreieckförmig oder trapezförmig ausgebildet sind.

2. Dichtungsanordnung nach Anspruch 1,
**dadurch gekennzeichnet,**
**dass** die ersten und zweiten Nuten (4, 5, 13, 14, 23, 24, 33, 34) alternierend angeordnet sind.

3. Dichtungsanordnung nach Anspruch 1 oder 2,
**dadurch gekennzeichnet,**
**dass** der Grundkörper (2, 11, 21, 31) aus einem Metall oder einem Kunststoff, einem Gusswerkstoff einem Sinterwerkstoff, einem modifizierten Naturwerkstoff oder einem anderen Nichtmetall besteht.

4. Dichtungsanordnung nach Anspruch 1, 2 oder 3,
**dadurch gekennzeichnet,**
**dass** die Schneiden (3, 12, 22, 32) Spitzen (6) mit unterschiedlichen Höhen aufweisen, oder dass die Nuten (4, 5, 13, 14, 23, 24, 33, 34) zwischen den Schneiden (3, 12, 22, 32) unterschiedliche Tiefen aufweisen, oder dass die Spitzen der Schneiden (3, 12, 22, 32) voneinander unterschiedliche seitliche Abstände aufweisen, und/oder dass die Schneiden (3, 12, 22, 32) geneigte Schneidenflanken (Druckfläche) aufweisen, wobei der Neigungswinkel der Schneidenflanken annähernd zwischen 0 Grad und 90 Grad beträgt.

5. Dichtungsanordnung nach einem der Ansprüche 1 bis 4,
**dadurch gekennzeichnet,**
**dass** zwischen zumindest jeweils zwei Schneiden (3, 12, 22, 32) auf den voneinander abgewandten Außenflächen (7, 8, 16, 17) des Grundkörpers (2, 11, 21, 31) ein Stützelement (15, 25, 35) ausgebildet ist, wobei sich das Stützelement (15, 25, 35) über die Nutentäler zwischen den benachbarten Schneiden (3, 12, 22, 32) beider Außenflächen (7, 8, 16, 17) erstreckt.

6. Dichtungsanordnung nach einem der Ansprüche 1 bis 5,
**dadurch gekennzeichnet,**
**dass** der Grundkörper (2, 11, 21, 31) oder das zumindest eine Stützelement (15, 25, 35) mindestens eine Durchgangsbohrung, die zentrisch oder exzentrisch in dem Stützelement (15, 25, 35) angeordnet ist, aufweist.

7. Dichtungsanordnung nach einem der Ansprüche 1 bis 6,
**dadurch gekennzeichnet,**
**dass** die mindestens eine Durchgangsbohrung (36) exzentrisch auf der zu dichtenden Seite angeordnet ist.

8. Dichtungsanordnung nach einem der Ansprüche 1 bis 7,
**dadurch gekennzeichnet,**
**dass** der Grundkörper mindestens eine Stichbohrung (37), die mit jeweils zumindest einer Durchgangsbohrung (36) und dem Innen- oder Außenrand des Grundkörpers (2, 11, 21, 31) in Verbindung steht, aufweist.

9. Dichtungsanordnung nach einem der Ansprüche 1 bis 8,
**dadurch gekennzeichnet,**
**dass** die Anlageflächen des zumindest einen Stützelementes (15, 25, 35) eben oder nach außen gewölbt ausgebildet sind, und/oder dass die Anlageflächen des zumindest einen Stützelementes (15, 25, 35) randseitige Vertiefungen (73) aufweisen.

10. Dichtungsanordnung nach einem der Ansprüche 1 bis 9,
**dadurch gekennzeichnet,**
**dass** jeweils eine im Querschnitt im Wesentlichen rechteckförmige erste Nut (4, 13, 23, 33) auf einer Außenfläche (7, 8, 16, 17) des Grundkörpers (2, 11, 21, 31) gegenüber einer im Querschnitt im Wesentlichen trapezförmigen oder im Wesentlichen dreieckförmigen zweiten Nut (5, 14, 24, 34) auf der abgewandten Außenfläche (7, 8, 16, 17) des Grundkörpers (2, 11, 21, 31) angeordnet ist.

11. Dichtungsanordnung nach einem der Ansprüche 1 bis 10,
**dadurch gekennzeichnet,**
**dass** auf wenigstens einer Anlagefläche des zumindest einen Stützelementes (15, 25, 35) eine Schicht aus einem dichtenden Material (26) angeordnet ist.

12. Dichtungsanordnung nach einem der Ansprüche 1 bis 11,
**dadurch gekennzeichnet,**
**dass** die Schicht aus einem elastischen Material (26) aus Gummi, Kunststoff oder rußgefülltem Kautschuk besteht.

13. Dichtungsanordnung nach einem der Ansprüche 1 bis 12,
**dadurch gekennzeichnet,**
**dass** das Silikon ein bei Raumtemperatur vernetzendes Mehrkomponenten-Silikon ist.

14. Dichtungsanordnung nach einem der Ansprüche 1 bis 13,
**dadurch gekennzeichnet,**
**dass** zumindest ein Dichtelement (40, 50, 60) in wenigstens einer Nut (4, 5, 13, 14, 23, 24, 33, 34) angeordnet ist.

15. Dichtungsanordnung nach einem der Ansprüche 1 bis 14,
**dadurch gekennzeichnet,**
**dass** das wenigstens eine Dichtelement (40, 50, 60) zumindest teilweise aus expandiertem Graphit, Glimmer, Silikon oder aus einem Metall besteht, und/oder dass das wenigstens eine Dichtelement (40, 50, 60) formschlüssig zwischen zwei Schneiden (3, 12, 22, 32) des Grundkörpers (2, 11, 21, 31) angeordnet ist, wobei die dem Grundkörper (2, 11, 21, 31) abgewandte Anlagefläche des wenigstens einen Dichtelementes (40, 50, 60) eben oder nach außen gewölbt ausgebildet ist.

16. Dichtungsanordnung nach einem der Ansprüche 1 bis 15,
**dadurch gekennzeichnet,**
**dass** die Dichtung ein Kontaktelement umfasst, welches aus einem dem Grundkörper (2, 11, 21, 31) zugewandten Metallblech (71) und einer auf der dem Grundkörper (2, 11, 21, 31) abgewandten Seite des Metallbleches (71) angeordneten Schicht aus expandiertem Graphit besteht.

17. 2. Dichtungsanordnung nach einem der Ansprüche 1 bis 16,
**dadurch gekennzeichnet,**
**dass** wenigstens eine Nut (4, 5, 13, 14, 23, 24, 33, 34) des Grundkörpers (2, 11, 21, 31) mit einem Sperrdruckmedium oder einem Indikatormedium gefüllt ist.

18. Dichtungsanordnung nach einem der Ansprüche 1 bis 17,
**dadurch gekennzeichnet,**
**dass** die Dichtung eine in sich geschlossene, bevorzugt kreissymmetrische Form aufweist.

19. Dichtungsanordnung nach einem der Ansprüche 1 bis 18,
**dadurch gekennzeichnet,**
**dass** der Grundkörper (2, 11, 21, 31) und das wenigstens eine Dichtelement (40, 50, 60) miteinander vorverpresst oder adhäsiv miteinander fest verbunden sind.

## Claims

1. Sealing arrangement, consisting of a static seal (1, 10, 30) and two sealing surfaces, wherein the seal consists of a basic body (2, 11, 21, 31), and cutting edges (3, 12, 22, 32) are formed at two exterior surfaces (7, 8, 16, 17) of the basic body (2, 11, 21, 31) that are turned away from each other, and the exterior surfaces (7, 8, 16, 17) are arranged between the two sealing surfaces, so that a plurality of successive sealing contact areas are formed between the basic body of the seal and the sealing surfaces,
wherein the cutting edges (3, 12, 22, 32) have a triangular cross-section, and one triangular surface of the cutting edges is oriented at right angles to the basic body (2, 11, 21, 31), wherein the tips (6) of the cutting edges (3, 12, 22, 32) protrude from the exterior surfaces (7, 8, 16, 17) of the basic body (2, 11, 21, 31), and first and second grooves (4, 5, 13, 14, 23, 24, 33, 34) are formed between the cutting edges (3, 12, 22, 32), and wherein the first grooves (4, 13, 23, 33) have a rectangular cross-section, and the second grooves (5, 14, 24, 34) are embodied to be triangular or trapezoidal.

2. Sealing arrangement according to claim 1,
**characterized in**
**that** the first and second grooves (4, 5, 13, 14, 23, 24, 33, 34) are arranged in an alternating fashion.

3. Sealing arrangement according to claim 1 or 2,
**characterized in**
**that** the basic body (2, 11, 21, 31) consists of a metal or a plastic, a cast material, a sintered material, a modified natural material, or another non-metal.

4. Sealing arrangement according to claim 1, 2 or 3,
**characterized in**
**that** the cutting edges (3, 12, 22, 32) comprise tips (6) of different heights, or that the grooves (4, 5, 13, 14, 23, 24, 33, 34) have different depths between the cutting edges (3, 12, 22, 32), or that the tips of the cutting edges (3, 12, 22, 32) have differing lateral distances, and/or that the cutting edges (3, 12, 22, 32) comprise inclined cutting flanks (pressure surface), wherein the angle of inclination of the cutting flanks is approximately between 0 degrees and 90 degrees.

5. Sealing arrangement according to one of claims 1 to 4,
**characterized in**
**that** between at least two cutting edges (3, 12, 22, 32) each, a support element (15, 25, 35) is formed on the exterior surfaces (7, 8, 16, 17) of the basic body (2, 11, 21, 31) that are turned away from each other, wherein the support element (15, 25, 35) extends over the groove valleys between the adjacent cutting edges (3, 12, 22, 32) of both exterior surfaces (7, 8, 16, 17).

6. Sealing arrangement according to one of claims 1 to 5,
**characterized in**
**that** the basic body (2, 11, 21, 31) or the at least one support element (15, 25, 35) comprises at least one through bore that is arranged centrically or eccentrically within the support element (15, 25, 35).

7. Sealing arrangement according to one of claims 1 to 6,
**characterized in**
**that** the at least one through bore (36) is arranged eccentrically on the side to be sealed.

8. Sealing arrangement according to one of claims 1 to 7,
**characterized in**
**that** the basic body comprises at least one tap bore (37) in communication with at least one through bore (36) and the inner or outer edge of the basic body (2, 11, 21, 31).

9. Sealing arrangement according to one of claims 1 to 8,
**characterized in**
**that** the locating surfaces of the at least one support element (15, 25, 35) are embodied to be plane or convex, and/or that the locating surfaces of the at least one support element (15, 25, 35) comprise indentations (73) on the edge side.

10. Sealing arrangement according to one of claims 1 to 9,
**characterized in**
**that** one first groove (4, 13, 23, 33) each having an essentially rectangular cross-section is arranged on an exterior surface (7, 8, 16, 17) of the basic body (2, 11, 21, 31) opposite to a second groove (5, 14, 24, 34) having an essentially trapezoidal or essentially triangular cross-section on the turned away exterior surface (7, 8, 16, 17) of the basic body (2, 11, 21, 31).

11. Sealing arrangement according to one of claims 1 to 10,
**characterized in**
**that** on at least one locating surface of the at least one support element (15, 25, 35), a layer of a sealing material (26) is arranged.

12. Sealing arrangement according to one of claims 1 to 11,
**characterized in**
**that** the layer of an elastic material (26) consists of rubber, plastics or natural rubber filled with carbon black.

13. Sealing arrangement according to one of claims 1 to 12,
**characterized in**
**that** the silicone is a multi-component silicone that is cross-linking at room temperature.

14. Sealing arrangement according to one of claims 1 to 13,
**characterized in**
**that** at least one sealing element (40, 50, 60) is arranged in at least one groove (4, 5, 13, 14, 23, 24, 33, 34).

15. Sealing arrangement according to one of claims 1 to 14,
**characterized in**
**that** the at least one sealing element (40, 50, 60) at least partially consists of expanded graphite, mica, silicone or of a metal, and/or that the at least one sealing element (40, 50, 60) is arranged with a form-fit between two cutting edges (3, 12, 22, 32) of the basic body (2, 11, 21, 31), wherein the locating surface of the at least one sealing element (40, 50, 60) turned away from the basic body (2, 11, 21, 31) is embodied to be plane or convex.

16. Sealing arrangement according to one of claims 1 to 15,
**characterized in**
**that** the seal comprises a contact element consisting of a sheet metal (71) facing the basic body (2, 11, 21, 31) and of a layer of expanded graphite arranged on the side of the sheet metal (71) turned away from the basic body (2, 11, 21, 31).

17. Sealing arrangement according to one of claims 1 to 16,
**characterized in**
**that** at least one groove (4, 5, 13, 14, 23, 24, 33, 34) of the basic body (2, 11, 21, 31) is filled with a sealing pressure medium or an indicator medium.

18. Sealing arrangement according to one of claims 1 to 17,
**characterized in**
**that** the seal has a closed, preferably circularly symmetric shape.

19. Sealing arrangement according to one of claims 1 to 18,
**characterized in**
**that** the basic body (2, 11, 21, 31) and the at least one sealing element (40, 50, 60) are pre-pressed to each other or adhesively firmly connected to each other.

## Revendications

1. Ensemble d'étanchéité, constitué d'un joint statique (1, 10, 30) et de deux surfaces d'étanchéité, dans lequel le joint est constitué d'un corps de base (2, 11, 21, 31) et des arêtes vives (3, 12, 22, 32) sont formées des deux côtés sur deux surfaces extérieures (7, 8, 16, 17) opposées l'une à l'autre du corps de base (2, 11, 21, 31) et les surfaces extérieures (7, 8, 16, 17) sont disposées entre les deux surfaces d'étanchéité, de sorte que plusieurs zones de contact d'étanchéité disposées les unes derrière les autres sont formées entre le corps de base du joint et les surfaces d'étanchéité,
dans lequel
les arêtes vives (3, 12, 22, 32) présentent une forme triangulaire en section transversale et une surface triangulaire des arêtes vives est orientée perpendiculairement au corps de base (2, 11, 21, 31), les pointes (6) des arêtes vives (3, 12, 22, 32) faisant saillie par rapport aux surfaces extérieures (7, 8, 16, 17) du corps de base (2, 11, 21, 31) et des premières et deuxièmes rainures (4, 5, 13, 14, 23, 24, 33, 34) étant formées entre les arêtes vives (3, 12, 22, 32), et dans lequel les premières rainures (4, 13, 23, 33) présentent une forme rectangulaire et les deuxièmes rainures (5, 14, 24, 34) une forme triangulaire ou trapézoïdale en section transversale.

2. Ensemble d'étanchéité selon la revendication 1,
**caractérisé en ce**
**que** les premières et deuxièmes rainures (4, 5, 13, 14, 23, 24, 33, 34) sont disposées en alternance.

3. Ensemble d'étanchéité selon la revendication 1 ou 2,
**caractérisé en ce**
**que** le corps de base (2, 11, 21, 31) est constitué d'un métal ou d'une matière plastique, d'un matériau de moulage, d'un matériau fritté, d'un matériau naturel modifié ou d'un autre matériau non métallique.

4. Ensemble d'étanchéité selon la revendication 1, 2 ou 3,
**caractérisé en ce**
**que** les arêtes vives (3, 12, 22, 32) présentent des pointes (6) de différentes hauteurs ou que les rainures (4, 5, 13, 14, 23, 24, 33, 34) entre les arêtes vives (3, 12, 22, 32) présentent différentes profondeurs ou que les pointes des arêtes vives (3, 12, 22, 32) présentent différentes distances latérales entre elles et/ou que les arêtes vives (3, 12, 22, 32) présentent des flancs d'arête vive (surface de pression) inclinés, l'angle d'inclinaison des flancs d'arête vive étant approximativement compris entre 0 degré et 90 degrés.

5. Ensemble d'étanchéité selon l'une des revendications 1 à 4,
**caractérisé en ce**
**qu'**un élément de support (15, 25, 35) est formé chaque fois entre au moins deux arêtes vives (3, 12, 22, 32) sur les surfaces extérieures (7, 8, 16, 17) opposées l'une à l'autre du corps de base (2, 11, 21, 31), l'élément de support (15, 25, 35) s'étendant par-dessus les creux de rainure entre les arêtes vives adjacentes (3, 12, 22, 32) des deux surfaces extérieures (7, 8, 16, 17).

6. Ensemble d'étanchéité selon l'une des revendications 1 à 5,
**caractérisé en ce**
**que** le corps de base (2, 11, 21, 31) ou ledit au moins un élément de support (15, 25, 35) présente au moins un trou traversant qui est disposé de manière centrée ou excentrée dans l'élément de support (15, 25, 35).

7. Ensemble d'étanchéité selon l'une des revendications 1 à 6,
**caractérisé en ce**
**que** ledit au moins un trou traversant (36) est disposé de manière excentrée sur le côté à rendre étanche.

8. Ensemble d'étanchéité selon l'une des revendications 1 à 7,
**caractérisé en ce**
**que** le corps de base présente au moins un trou longitudinal (37) qui est chaque fois relié à au moins un trou traversant (36) et au bord intérieur ou extérieur du corps de base (2, 11, 21, 31).

9. Ensemble d'étanchéité selon l'une des revendications 1 à 8,
**caractérisé en ce**
**que** les surfaces de contact dudit au moins un élément de support (15, 25, 35) sont planes ou incurvées vers l'extérieur et/ou que les surfaces de contact dudit au moins un élément de support (15, 25, 35) présentent des renfoncements (73) au bord.

10. Ensemble d'étanchéité selon l'une des revendications 1 à 9,
**caractérisé en ce**
**qu'**une première rainure (4, 13, 23, 33) de forme sensiblement rectangulaire en section transversale est chaque fois disposée sur une surface extérieure (7, 8, 16, 17) du corps de base (2, 11, 21, 31) en face d'une deuxième rainure (5, 14, 24, 34) de forme sensiblement trapézoïdale ou sensiblement triangulaire en section transversale sur la surface extérieure opposée (7, 8, 16, 17) du corps de base (2, 11, 21, 31).

11. Ensemble d'étanchéité selon l'une des revendications 1 à 10,
caractérisé en ce
en ce qu'une couche d'un matériau d'étanchéité (26) est disposée sur au moins une surface de contact dudit au moins un élément de support (15, 25, 35).

12. Ensemble d'étanchéité selon l'une des revendications 1 à 11,
**caractérisé en ce**
**que** la couche est constituée d'un matériau élastique (26) en caoutchouc, matière plastique ou caoutchouc chargé de noir de carbone.

13. Ensemble d'étanchéité selon l'une des revendications 1 à 12,
**caractérisé en ce**
**que** le silicone est un silicone multi-composant qui se réticule à température ambiante.

14. Ensemble d'étanchéité selon l'une des revendications 1 à 13,
**caractérisé en ce**
**qu'**au moins un élément d'étanchéité (40, 50, 60) est disposé dans au moins une rainure (4, 5, 13, 14, 23, 24, 33, 34).

15. Ensemble d'étanchéité selon l'une des revendications 1 à 14,
**caractérisé en ce**
**que** ledit au moins un élément d'étanchéité (40, 50, 60) est constitué au moins partiellement de graphite expansé, de mica, de silicone ou d'un métal et/ou que ledit au moins un élément d'étanchéité (40, 50, 60) est disposé par complémentarité de forme entre deux arêtes vives (3, 12, 22, 32) du corps de base (2, 11, 21, 31), la surface de contact dudit au moins un élément d'étanchéité (40, 50, 60) opposée au corps de base (2, 11, 21, 31) étant plane ou incurvée vers l'extérieur.

16. Ensemble d'étanchéité selon l'une des revendications 1 à 15,
**caractérisé en ce**
**que** le joint comprend un élément de contact qui est constitué d'une plaque métallique (71) tournée vers le corps de base (2, 11, 21, 31) et d'une couche de graphite expansé disposée sur le côté de la plaque métallique (71) opposé au corps de base (2, 11, 21, 31).

17. Ensemble d'étanchéité selon l'une des revendications 1 à 16,
**caractérisé en ce**
**qu'**au moins une rainure (4, 5, 13, 14, 23, 24, 33, 34) du corps de base (2, 11, 21, 31) est remplie d'un fluide de pression de barrage ou d'un fluide indicateur.

18. Ensemble d'étanchéité selon l'une des revendications 1 à 17,
**caractérisé en ce**
**que** le joint a une forme fermée sur elle-même, de préférence à symétrie circulaire.

19. Ensemble d'étanchéité selon l'une des revendications 1 à 18,
**caractérisé en ce**
**que** le corps de base (2, 11, 21, 31) et ledit au moins un élément d'étanchéité (40, 50, 60) sont prépressés ensemble ou reliés l'un à l'autre par adhésion.
